# EUROPEAN PATENT SPECIFICATION

(11) **EP 4 632 835 B1**
(45) Date of publication and mention of the grant of the patent: **02.12.2026**
(21) Application number: 25169048.3
(22) Date of filing: 08.04.2025
(51) Int. Cl.: H01M 4/133, H01M 4/134, H01M 4/38, H01M 4/62, H01M 4/02, H01M 4/1393, H01M 4/04, H01M 4/13, H01M 4/139, H01M 4/36, H01M 4/48, H01M 4/587, H01M 10/0525

(54) **NEGATIVE ELECTRODE ACTIVE MATERIAL FOR SECONDARY BATTERY, METHOD OF MANUFACTURING THE SAME, NEGATIVE ELECTRODE COMPRISING THE SAME, AND SECONDARY BATTERY COMPRISING THE SAME**
NEGATIVELEKTRODENAKTIVMATERIAL FÜR SEKUNDÄRBATTERIE, VERFAHREN ZUR HERSTELLUNG DAVON, NEGATIVELEKTRODE DAMIT UND SEKUNDÄRBATTERIE DAMIT
MATÉRIAU ACTIF D'ÉLECTRODE NÉGATIVE POUR BATTERIE SECONDAIRE, SON PROCÉDÉ DE FABRICATION, ÉLECTRODE NÉGATIVE LE COMPRENANT ET BATTERIE SECONDAIRE LE COMPRENANT

(30) Priority: 12.04.2024 KR 20240049485
(43) Date of publication of application: 15.10.2025
(73) Proprietor: SK On Co., Ltd., Seoul 03149 (KR); SK Innovation Co., Ltd., Seoul 03188 (KR)
(72) Inventor: CHUNG, Ju Ho, 34124 Daejeon (KR); KIM, Seon Ah, 34124 Daejeon (KR); PARK, Yang Kyu, 34124 Daejeon (KR); CHOI, Jae Young, 34124 Daejeon (KR)
(74) Representative: Prüfer & Partner mbB Patentanwälte · Rechtsanwälte

(56) References cited:
- EP-A1- 3 584 861
- EP-A1- 4 266 415
- US-A1- 2018 219 216

## Description

### BACKGROUND OF THE INVENTION

### 1. Field

The present disclosure relates to a negative electrode active material for a secondary battery, a method of manufacturing the same, a negative electrode for the secondary battery including the same, and the secondary battery including same.

### 2. Description of the Related Art

Secondary batteries convert electrical energy into chemical energy and store the chemical energy so that the secondary batteries can be reused multiple times through charging and discharging. Secondary batteries are widely used throughout the industry due to their economical and eco-friendly characteristics. In particular, lithium secondary batteries are widely used throughout the industry, including portable devices which require high-density energy.

A carbon-based negative electrode active material may be used as a negative electrode active material of a lithium secondary battery. However, since the maximum value of the theoretical capacity of the carbon-based negative electrode active material is limited, highcapacity and high-power secondary batteries cannot be manufactured. In order to improve this, research is being actively conducted so as to use various materials as negative electrode active materials.
Patent document EP 4 266 415 A1 discloses a negative electrode active material including: silicon-based composite particles including SiOx (0<x<2) and a Mg compound or Li compound; and a carbon layer provided on the silicon-based composite particles, in which the silicon-based composite particles have a BET specific surface area of 5 m² /g to 60 m² /g, and the negative electrode active material has a BET specific surface area of 2 m2 /g to 15 m² /g, and a powder conductivity of 0.05 S/cm to 1 S/cm at a powder density of 1.4 g/cc, a negative electrode including the same, a secondary battery including the negative electrode and a method for preparing the negative electrode active material.

### SUMMARY OF THE INVENTION

An object of the present disclosure is to provide a secondary battery having a high capacity, excellent charge/discharge characteristics, and improved storage performance.

In addition, the present disclosure provides a secondary battery with improved structural stability.

In addition, the present disclosure can be widely applied in the fields of electric vehicles, battery charging stations, and other green technologies such as photovoltaics and wind power using batteries.

In addition, the present disclosure may be used in eco-friendly mobility, including electric vehicles and hybrid vehicles, to prevent climate change by suppressing air pollution and greenhouse fluid emissions.

A negative electrode active material for a secondary according to embodiments of the present disclosure may include a silicon-based oxide particle, and a carbon coating layer coating at least a portion of the silicon-based oxide particle, wherein the carbon coating layer has a surface roughness of greater than or equal to 4 nm and less than or equal to 30 nm, wherein the surface roughness is measured using an atomic force microscope .

The carbon coating layer may include at least one selected from the group consisting of natural graphite, artificial graphite, hard carbon, and soft carbon.

The silicon-based oxide particle including the carbon coating layer may have a BET specific surface area of greater than or equal to 0.90 m²/g and/or less than or equal to 7.00 m²/g.

The silicon-based oxide particle may be doped with at least one metal selected from the group consisting of Mg, Li, Al, Ca, Ti, and V.

The negative electrode active material for the secondary battery may further include a carbon-based active material.

The carbon-based active material may include at least one selected from the group consisting of artificial graphite, natural graphite, hard carbon, soft carbon, and activated carbon.

A negative electrode for a secondary battery according to embodiments of the present disclosure may include a negative electrode current collector, and an active material layer including a negative electrode active material including a silicon-based oxide particle and a carbon coating layer coating at least a portion of the silicon-based oxide particle, wherein the carbon coating layer has a surface roughness of greater than or equal to 4 nm and less than or equal to 30 nm.

The active material layer further may include a carbon-based active material, and the silicon-based oxide particle may be dispersed in the carbon-based active material.

A secondary battery according to embodiments of the present disclosure may include a negative electrode including a negative electrode current collector, and an active material layer including a negative electrode active material including a silicon-based oxide particle and a carbon coating layer coating at least a portion of the silicon-based oxide particle, wherein the carbon coating layer has a surface roughness of greater than or equal to 4 nm and less than or equal to 30 nm, and a positive electrode opposing the negative electrode.

A method of manufacturing a negative electrode active material for a secondary battery according to embodiments of the present disclosure includes forming a carbon coating layer on a silicon-based oxide particle, wherein the forming the carbon coating layer (12) comprises mixing the silicon-based oxide particle with a carbon source, wherein the carbon coating layer has a surface roughness of greater than or equal to 4 nm and less than or equal to 30 nm, wherein the surface roughness is measured using an atomic force microscope.

The forming the carbon coating layer may include mixing the silicon-based oxide particle with a carbon source.

The carbon source may be at least one selected from the group consisting of liquid pitch, solid pitch, resin, coal tar, and cokes.

The forming the carbon coating layer may be performed at 800 °C or more and/or 1200 °C or less.

The forming the carbon coating layer may include: injecting the silicon-based oxide particle into a chamber, and injecting hydrocarbon gas into the chamber.

The hydrocarbon gas may include at least one selected from the group consisting of acetylene, ethylene, propane, ethane, and methane.

### BRIEF DESCRIPTION OF THE DRAWINGS

FIG. 1 schematically illustrates a silicon-based oxide particle including a carbon coating layer according to an embodiment of the present disclosure.
FIG. 2 illustrates a method of manufacturing a negative electrode active material for a secondary battery according to an embodiment of the present disclosure.
FIG. 3 illustrates a negative electrode for a secondary battery according to an embodiment of the present disclosure.
FIG. 4 illustrates a cross-section of an active material layer according to an embodiment of the present disclosure.
FIG. 5 illustrates a secondary battery according to an embodiment of the present disclosure.

### DETAILED DESCRIPTION

Hereinafter, the present disclosure will be described in detail with reference to the accompanying drawings. This is, however, illustrative only and not intended to limit the disclosure to the specific embodiments illustratively described.

Among the physical properties mentioned in this application, when the measured temperature affects the physical properties, unless otherwise specified, the physical properties are those measured at room temperature.

As used herein, the term room temperature is natural temperature which is not heated or cooled, and may mean, for example, a temperature in the range of 10° C to 30° C, for example, about 15° C or more, about 18° C or more, about 20° C or more, about 23° C or more, about 27° C or less, or 25° C.

As used in this disclosure, the term "and/or" may refer to one of the associated listed items, or may refer to and include any and all possible combinations of two or more of the items. Also, in this disclosure, "/" between words has the same meaning as "and/or" unless otherwise stated.

The specific terms used herein are for convenience of description only and are not intended to be limiting exemplary embodiments.

In this specification, the average particle size (D50) may be defined as a particle size corresponding to 50% of the volume cumulative amount in a particle size distribution curve of the particles. The average particle size (D50) may be measured, for example, using a laser diffraction method. According to the above laser diffraction method, generally, a particle size ranging from a submicron region to several millimeters (mm) may be measured, and results of high reproducibility and high resolvability may be obtained.

### <Negative electrode active material for secondary battery>

A negative electrode active material for a secondary battery according to the present disclosure includes a silicon-based oxide particle 11 and a carbon coating layer 12 which coats at least a part of the silicon-based oxide particle 11. The surface roughness of the carbon coating layer 12 is in a range from 4 nm to 30 nm.

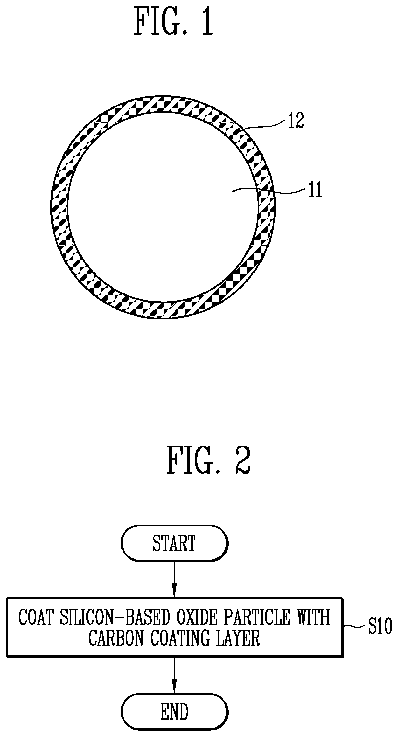

FIG. 1 schematically illustrates the silicon-based oxide particle 11 including a carbon coating layer according to an embodiment of the present disclosure.

Referring to FIG. 1, the carbon coating layer 12 may be formed on an outer surface of the silicon-based oxide particle 11. The silicon-based oxide particle 11 may have a spherical shape, but the present disclosure is not limited thereto.

The silicon-based oxide particle 11 may include a silicon-based oxide component. For example, the silicon-based oxide particle may be SiO₂ or SiOₓ (0<x<2). In addition, SiOₓ may contain SiO₂ and Si, and Si may be in a phase. In an embodiment, the silicon-based oxide particle may have a particle size of 1 µm to 30 µm.

The silicon-based oxide particle 11 may be doped with at least one selected from the group consisting of Mg, Li, Al, Ca, Ti, and V. One of the metals may be distributed on a surface and/or an inside of the silicon-based oxide particle while the metal is doped into the silicon-based oxide particle. For example, a magnesium compound may be distributed and located on the surface of the silicon-based oxide particle.

The silicon-based oxide particle may be coated with a carbon coating layer. The carbon coating layer may cover the surface of the silicon-based oxide particle. The carbon coating layer may cover the entire surface of the silicon-based oxide particle. Alternatively, only a part of the surface may be covered. In other words, the surface of the silicon-based oxide particle is not exposed to the outside, or a part of the surface of the silicon-based oxide particle may be exposed to the outside.

The carbon coating layer 12 may include at least one selected from the group consisting of natural graphite, artificial graphite, hard carbon, and soft carbon. However, the present disclosure is not limited thereto. The carbon coating layer 12 may include at least one selected from the group consisting of acetylene black, Ketjen black, Super P, and graphene.

The carbon coating layer 12 may be located on the outer surface of the silicon-based oxide particle 11 to improve electrical conductivity. As a result, the electrical resistance may be lowered, and the electrical characteristics of the secondary battery including the silicon-based oxide particle 11 may be improved. For example, the initial efficiency, charge/discharge characteristics, or storage characteristics of the secondary battery may be improved.

The surface roughness of the carbon coating layer 12 may be formed differently in the processes of forming the carbon coating layer 12. The electrical characteristics of the secondary battery may vary depending on the surface roughness of the carbon coating layer.

The negative electrode active material for the secondary battery of the present disclosure may determine the surface roughness of the carbon coating layer which may maximize performance. The surface roughness of the carbon coating layer 12 may be in a range from 4 nm to 30 nm. In an embodiment, the surface roughness may be 5 nm or greater, 6 nm or more, or 7 nm or more. In another embodiment, the surface roughness may be 30 nm or less, 29 nm or less, or 28 nm or less. Surface roughness may mean the arithmetic mean deviation of the profile (Ra).

When the carbon coating layer is formed in the above ranges, the discharge capacity of the secondary battery will be improved, so that a large amount of energy may be stored. In addition, the initial efficiency may be improved when the carbon coating layer is formed in the above ranges. In addition, the carbon coating layer may be formed in the above-described ranges to improve rate characteristics or storage capacity characteristics.

The discharge capacity, initial efficiency, rate characteristics, and storage capacity characteristics will be described in detail below along with experimental examples.

The BET specific surface area of the silicon-based oxide particle 11 including the carbon coating layer may be greater than or equal to 0.90 m²/g and/or less than or equal to 7.00 m²/g. In embodiments, the specific surface area may be at least 0.95 m²/g or at least 1.00 m²/g. In addition, the specific surface area may be 6.95 m²/g or less or 6.90 m²/g. The specific surface area may be measured by the BET (Brunauer-Emmett-Teller) method.

When the specific surface area of the silicon-based oxide particle 11 including the carbon coating layer is formed in the above-described ranges, the secondary battery may have high performance. For example, the secondary battery may exhibit excellent performance in terms of discharge capacity, initial efficiency, rate characteristics, and storage capacity characteristics as described above.

### <Method of manufacturing negative electrode active material for secondary battery>

FIG. 2 illustrates a method of manufacturing a negative electrode active material for a secondary battery according to an embodiment of the present disclosure. Referring to FIG. 2, the method of manufacturing the negative electrode active material for the secondary battery of the present disclosure includes forming the carbon coating layer 12 on the silicon-based oxide particle 11. The surface roughness of the carbon coating layer 12 formed by the manufacturing method of the present disclosure may be greater than or equal to 4 nm and less than or equal to 30 nm.

In an embodiment, according to the present disclosure, the silicon-based oxide particle 11 and a carbon source may be mixed in the process of forming the carbon coating layer 12.

The carbon coating layer 12 may be formed on the outer surface of the silicon-based oxide particle 11 by mixing the silicon-based oxide particle 11 with the carbon source. The silicon-based oxide particle 11 and the carbon source may be prepared and mixed with each other.

The silicon-based oxide particle may refer to the silicon-based oxide particle mentioned in the negative electrode active material for the secondary battery.

The carbon source may include a variety of materials which provide carbon. The carbon source may include a solid carbon source, a liquid carbon source, or a carbon compound.

The carbon source may be at least one selected from the group consisting of liquid pitch, solid pitch, resin, coal tar, and cokes.

The carbon source may also include, but is not limited to, phenol, polyimide, polyurethane, polyvinyl alcohol, and the like.

The method of mixing one another is not particularly limited. For example, one of the following methods: drum mill, attrition mill, agitator mill, and three roll mill may be used therefor. By this method, the carbon source may be attached to the outer surface of the silicon-based oxide particle 11.

The process of forming the carbon coating layer 12 may proceed at 800 °C or more and 1200 °C or less. In an embodiment, coating the carbon coating layer 12 at step S10 may be performed at a temperature of 850 °C or more, 900 °C or more, or 1000 °C or more. Further, step S10 of coating the carbon coating layer 12 may be performed at a temperature of 1150 °C or less, 1100°C or less, or 1050 °C or less.

After the silicon-based oxide particle 11 and the carbon source are mixed, heat may be applied to the silicon-based oxide particle 11. Alternatively, high-temperature heat may be applied while the silicon-based oxide particle 11 and the carbon source are being mixed with each other.

The time to heat the silicon-based oxide particle 11 mixed with the carbon source may be from 1 hour to 48 hours. The carbon coating layer may be stably formed on the surface of the silicon-based oxide particle by heating within the above-described range of time.

In another embodiment, forming the carbon coating layer 12 may include injecting silicon-based oxide particle into a chamber and injecting hydrocarbon gas into the chamber.

The chamber may form a space for receiving the silicon-based oxide particle 11. The chamber may include an inlet through which the hydrocarbon gas is injected and an outlet through which the hydrocarbon gas exits. The chamber may further include a controller for adjusting the temperature therein. The chamber may be provided in an open configuration, or an accommodation space in the chamber may be provided in a closed configuration. The shape of the chamber is not particularly limited as long as the hydrocarbon gas is injected and the silicon-based oxide particle 11 may be accommodated in the chamber.

After the process of injecting the silicon-based oxide particle into the chamber, the process of injecting the hydrocarbon gas into the chamber may proceed. When the hydrocarbon gas is injected into the chamber, the hydrocarbon gas may contact the silicon-based oxide particle 11 to form the carbon coating layer 12.

In an embodiment, chemical vapor deposition may be used in the manufacturing method of the present disclosure.

The hydrocarbon gas may include at least one selected from the group consisting of acetylene, ethylene, propane, ethane, and methane. For example, the carbon coating layer may be attached to the surface of the silicon-based oxide particle by injecting acetylene gas into the chamber, or by injecting ethylene gas into the chamber.

As a result, the carbon coating layer 12 may be formed stably and quickly on the outer surface of the silicon-based oxide particle 11.

The negative electrode active material for the secondary battery of the present disclosure may further include a carbon-based active material. In an embodiment, the negative electrode active material may include both the silicon-based oxide particle 11 and the carbon-based active material. The carbon-based active material may include at least one selected from the group consisting of artificial graphite, natural graphite, hard carbon, soft carbon, and activated carbon. The carbon-based active material may also include at least one selected from the group consisting of acetylene black, Ketjen black, Super P, and graphene.

The weight percent (%) of the carbon-based negative electrode active material relative to the total solid weight of the negative electrode active material may be at least 0.5 weight% of the silicon-based oxide particle relative to the total solid weight of the negative electrode active material.

The negative electrode active material may further include a binder. The binder may be a material capable of improving the adhesion between the negative electrode active material and the negative electrode current collector or the adhesion between electrode active materials.

In an embodiment, the binder may include at least one kind selected from the group consisting of an aqueous binder and a non-aqueous binder. For example, when a solvent of a primer composition is an aqueous solvent, an aqueous binder may be used as the binder. When the solvent of the primer composition is a non-aqueous solvent, a non-aqueous binder may be used as the binder.

For example, the binder may include, but is not limited to, at least one kind selected from the group consisting of styrene-butadiene rubber (SBR) based binders, carboxymethyl cellulose (CMC), polyacrylic acid based binders, poly(3,4-ethylenedioxythiophene) (PEDOT)-based binders, polyvinylidenefluoride (PVDF), poly(vinylidene fluoride-co-hexafluoropropylene), polyacrylonitrile, polymethylmethacrylate, acrylonitrile butadiene rubbers (NBR), and polybutadiene rubbers (BR).

The content of the binder may be in a range from 0.1% to 3.0% based on the total solid weight of the negative electrode active material. When the content of the binder is included within the above-described range, the negative electrode may be stably manufactured with improved performance.

The negative electrode active material for the secondary battery of the present disclosure may further include a thickener. The thickener may reduce the occurrence of cracks on the negative electrode surface by strengthening a cohesive force of the binder.

The thickener may include, but is not limited to, at least one selected from the group consisting of carboxymethyl cellulose, methyl cellulose, hydroxypropyl cellulose, methyl hydroxypropylcellulose, ethyl hydroxyethyl cellulose, methyl ethyl hydroxyethylene cellulose, and cellulose gum.

The content of the thickener may be in a range from 0.1 wt% to 3.0 wt%, specifically 0.2 wt% to 1.5 wt%, and more specifically 0.3 wt% to 1.2 wt%, based on the total solid weight of the negative electrode active material. When the content of the thickener is included within the above range, the negative electrode may be stably manufactured with improved performance.

The negative electrode active material for the secondary battery of the present disclosure may further include a conductive material to improve conductivity. The conductive material may include at least one selected from the group consisting of a metal-based conductive material, a carbon-based conductive material, and a conductive polymer.

The metal-based conductive material may be, for example, a metal powder, such as copper, nickel, aluminum, or silver, a conductive whisker, such as metal fiber zinc oxide or potassium titanate, or a conductive metal oxide, such as titanium oxide. The carbon-based conductive material may be, for example, graphite, carbon black, graphene, or carbon nanotubes. The conductive polymer may be, for example, a polyphenylene derivative or the like.

The content of the conductive material may be in a range from 0.5 wt% to 5 wt% based on the total solid weight of the negative electrode active material. When the content of the conductive material is included within the above range, the shrinkage-expansion characteristics of the silicon-based oxide particle 11 at an interface portion may be compensated and an electrical contact between the negative electrode current collector and the negative electrode active material may be prevented from weakening at the interface portion. Accordingly, a stable negative electrode with improved performance may be manufactured.

### <Negative electrode for secondary battery>

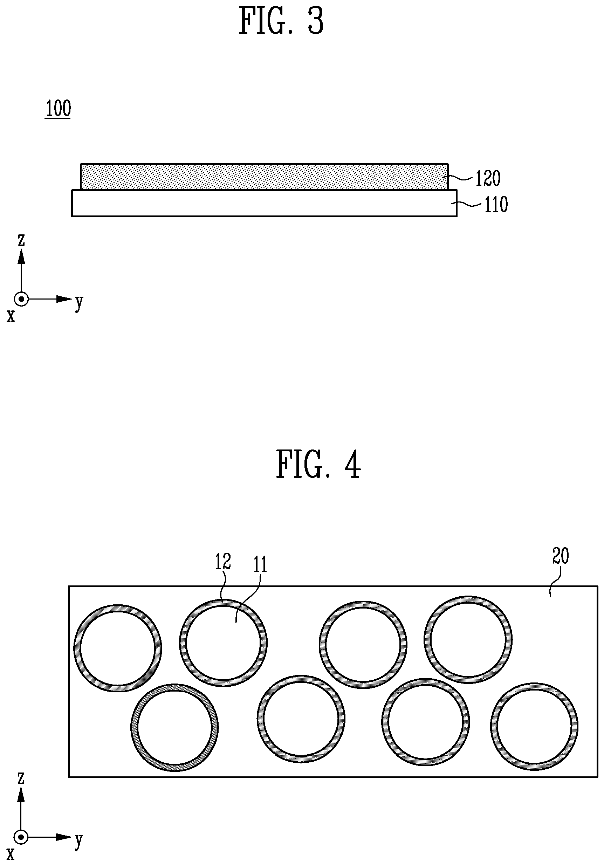

FIG. 3 illustrates a negative electrode for a secondary battery according to an embodiment of the present disclosure.

FIG. 4 illustrates a cross-section of an active material layer according to an embodiment.

Referring to FIG. 3, a negative electrode 100 for a secondary battery according to an embodiment of the present disclosure includes a negative electrode current collector 110 and an active material layer 120 applied with a negative electrode active material on the negative electrode current collector 110.

The negative electrode current collector 110 is not particularly limited as long as the negative electrode current collector 110 has conductivity without causing any chemical change in the secondary battery. For example, copper, stainless steel, aluminum, nickel, titanium, calcined carbon, a copper or stainless steel surface treated with carbon, nickel, titanium or silver, an aluminum-cadmium alloy or the like may be used for the negative electrode current collector 110. In addition, fine irregularities may be formed on the surface to strengthen the bonding force of the negative electrode active material, and the negative electrode current collector 110 may be used in various forms such as a film, a sheet, foil, a net, a porous body, foam, and nonwoven fabrics.

The negative electrode active material may be a material capable of occluding and desorbing lithium ions. The negative electrode active material may include the silicon-based oxide particle 11 including the carbon coating layer 12 as described above.

The active material layer 120 may further include a carbon-based active material 20. The silicon-based oxide particle 11 may be dispersed within the carbon-based active material. More specifically, FIG. 4 schematically shows a cross section of the active material layer 120. Referring to FIG. 4, the active material layer 120 may be provided such that the silicon-based oxide particles 11 may be evenly distributed in the carbon-based active material 20. By dispersing the silicon-based oxide particles 11 in the carbon-based active material 20, a stabilized structure may be maintained even when the silicon-based oxide particles 11 have a high volume expansion force.

The negative electrode 100 may be manufactured by applying a negative electrode slurry onto the negative electrode current collector 110. The negative electrode slurry may include a silicon-based oxide particle, and may further include a carbon-based active material. The negative electrode 100 may be prepared by mixing the silicon-based oxide particle and the carbon-based active material, including a binder and a thickener. The negative electrode 100 may be manufactured d by coating, rolling, and drying the prepared negative electrode slurry at a predetermined loading amount on the negative electrode current collector 110.

### <Secondary battery>

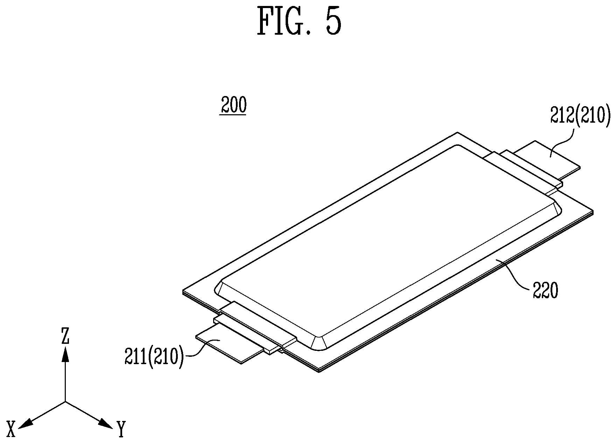

FIG. 5 illustrates a secondary battery 200 according to an embodiment of the present disclosure.

The secondary battery of the present disclosure may include a negative electrode and a positive electrode facing the negative electrode. The positive electrode may include a positive electrode active material into and from which lithium ions may be inserted and extracted. The negative electrode may contain a negative electrode active material. The negative electrode active material may include the silicon-based oxide particle 11 on which the carbon coating layer 12 is formed as described above.

The secondary battery may further include a separator to prevent an electrical shortcircuit between the positive electrode and the negative electrode and to generate an ion flow. Referring to FIG. 5, the secondary battery 200 may further include an exterior material 220. An anode and a negative electrode may be included in the exterior material. The exterior material 220 may further include a cell tab 210 which protrudes to the outside for electrical connections with the outside. The cell tab 210 may be connected to the positive electrode and the negative electrode. The cell tab 210 may include a positive tab 211 connected to the positive electrode and a negative tab 212 connected to the negative electrode.

### Preparation example-Preparation of silicon-based oxide particle

### Preparation Example 1

Si (Sigma-Aldrich, silicon powder, 99 %) and SiO₂ (Sigma, silicon dioxide powder, 99.5 %) were introduced into a reactor. The temperature of the reactor was raised to 1400 °C at a temperature increase rate of 3 °C/min and maintained for about 30 minutes to vaporize a silicon source. The internal pressure of the reactor was maintained below 10⁻³ torr. Silicon-based oxide particles were prepared by contacting the vaporized silicon source with a cooling plate maintained at 900°C. The average particle size (D50) of the silicon-based material was about 6 µm.

### Preparation Example 2

95 parts by weight of the silicon-based oxide particle prepared in Preparation Example 1 and 5 parts by weight of liquid pitch (Hebei Qunbang Chemical, liquid Medium Temperature Coal Tar Pitch) were mixed. The mixture was then stirred and heated to a temperature of 1000 °C for about 6 hours to form the carbon coating layer 12.

### Preparation Example 3

95 parts by weight of the silicon-based oxide particle prepared in Preparation Example 1 and 5 parts by weight of solid pitch (Hebei Qunbang Chemical, Coal Tar Pitch) were mixed. The mixture was then stirred and heated to a temperature of 1000 °C for about 6 hours to form the carbon coating layer 12.

### Preparation Example 4

The silicon-based oxide particle prepared in Preparation Example 1 was introduced into a chamber, and acetylene gas and nitrogen gas were sprayed into the chamber. The inside of the chamber containing the silicon-based oxide silicon was set to a temperature of 900 °C, and the acetylene gas and the nitrogen gas were mixed at a ratio of 2:1 and sprayed for 12 hours. In this manner, the carbon coating layer 12 was formed.

### Preparation Example 5

The silicon-based oxide particle prepared in Preparation Example 1 was introduced into a chamber, and acetylene, methane gas, and nitrogen gas were sprayed into the chamber. The inside of the chamber containing the silicon-based oxide silicon was set to a temperature of 1000 °C, and the acetylene gas, the methane gas, and the nitrogen gas were mixed at a ratio of 1:1:1 and sprayed for 12 hours. As a result, the carbon coating layer 12 was formed.

### Preparation Example 6

The silicon-based oxide particle prepared in Preparation Example 1 was introduced into a chamber, and ethylene gas and nitrogen gas were sprayed into the chamber. The inside of the chamber containing the silicon-based oxide silicon was set to a temperature of 900 °C, and the ethylene gas and the nitrogen gas were mixed at a ratio of 2:1 and sprayed for 12 hours. In this manner, the carbon coating layer 12 was formed.

### Preparation Example 7

The silicon-based oxide particle prepared in Preparation Example 1 was introduced into a chamber, and propane gas and nitrogen gas were sprayed into the chamber. The temperature inside the chamber containing the silicon-based oxide silicon was set at 950 °C, and the propane gas and the nitrogen gas were mixed at a ratio of 2:1 and sprayed for 12 hours. In this manner, the carbon coating layer 12 was formed.

### Preparation Example 8

The silicon-based oxide particle prepared in Preparation Example 1 was introduced into a chamber, and methane gas and nitrogen gas were sprayed into the chamber. The temperature inside the chamber containing the silicon-based oxide silicon was set to 1000 °C, and the methane gas and the nitrogen gas were mixed at a ratio of 2:1 and sprayed for 12 hours. In this manner, the carbon coating layer 12 was formed.

### Preparation Example 9

The silicon-based oxide particle prepared in Preparation Example 1 was introduced into a chamber, and methane gas and nitrogen gas were sprayed into the chamber. The temperature inside the chamber containing the silicon-based oxide silicon was set to 1000 °C, and the methane gas and the nitrogen gas were mixed at a ratio of 2:1 and sprayed for 30 hours. In this manner, the carbon coating layer 12 was formed.

### Preparation Example 10

The silicon-based oxide particle prepared in Preparation Example 1 was introduced into the chamber, and acetylene gas and nitrogen gas were sprayed into the chamber. The temperature inside the chamber containing the silicon-based oxide silicon was set to 900 °C, and the acetylene gas and the nitrogen gas were mixed at a ratio of 2:1 and sprayed for 30 hours. In this manner, the carbon coating layer 12 was formed.

### Preparation Example 11

The silicon-based oxide particle prepared in Preparation Example 1 was introduced into a chamber, and methane gas and nitrogen gas were sprayed into the chamber. The temperature inside the chamber containing the silicon-based oxide silicon was set to 1000 °C, and the methane gas and the nitrogen gas were mixed at a ratio of 2:1 and sprayed for 40 hours. In this manner, the carbon coating layer 12 was formed.

### Preparation Example 12

The silicon-based oxide particle prepared in Preparation Example 1 was introduced into a chamber, and acetylene gas and nitrogen gas were sprayed into the chamber. The temperature inside the chamber containing the silicon-based oxide silicon was set to 900 °C, and the acetylene gas and the nitrogen gas were mixed at a ratio of 2:1 and sprayed for 40 hours. In this manner, the carbon coating layer 12 was formed.

### Experimental Example 1 - Physical properties of silicon-based oxide particle

The surface roughness of the silicon-based oxide particle prepared in the previous preparation example was measured using an atomic force microscope. A tapping mode was used, and a ScanAsyst-Air tip was used. A scan rate was set to 0.7 Hz, and the resolution was set to 256 accordingly.

A surface roughness of an area of 500nm * 500nm on the surface of the silicon-based oxide particle was measured. The measured surface roughness means the arithmetic mean deviation of the profile (Ra) of the silicon-based oxide particle. That is, the surface roughness of the carbon coating layer is the arithmetic mean deviation of the profile (Ra) of the carbon coating layer.

The surface roughness of the carbon coating layer is an average of samples measured over a plurality of times. The surface roughness is not formed identically in the entire area of the silicon-based oxide particle. Therefore, by measuring the surface roughness multiple times and calculating the average, the accuracy of the measurement is increased and errors are reduced.

In the embodiment, the roughness of different regions of the silicon-based oxide particle is measured a plurality of times, and then the surface roughness value is averaged.

In addition, the surface roughness of the carbon coating layer is the average of the remaining samples with the exclusion of the maximum and minimum values from the samples measured the plurality of times.

On the other hand, after the maximum and minimum values are removed from the values measured the plurality of times, the surface roughness of the carbon coating layer may be averaged. By removing the maximum and minimum values, experimental errors occurring in the experimental process may be reduced or measurement errors occurring in the measurement process may be reduced.

In an embodiment, according to the present disclosure, the arithmetic mean deviation of the profile was measured in 15 regions per silicon-based oxide particle. Subsequently, the maximum and minimum values of 15 samples were removed, and the surface roughness of the carbon coating layer was measured by averaging the remaining 13 samples.

Next, the specific surface area of the silicon-based oxide particle was measured. The specific surface area was measured by the Brunauer-Emmett-Teller (BET) method. The silicon-based oxide particle was heated to a temperature of 1000°C for 10 hours. Subsequently, the specific surface area of the particle was measured using a measuring device (Tristar II, manufactured by Micromeritics).

In addition, the coating amount of the carbon coating layer 12 was measured. The coating amount of the carbon coating layer 12 was measured with a carbon sulfur analyzer (CS Analyzer, CS-2000, manufactured by ELTRA GmbH).

The physical properties of the silicon-based oxide particles prepared according to Preparation Examples 1 to 12 are shown in Table 1 below.

**[Table 1]**

| | Coating amount [%] | Specific surface area [m²/g] | Roughness [nm] |
|---|---|---|---|
| Preparation Example 1 | 0 | 2.45 | 18.1 |
| Preparation Example 2 | 3.5 | 2.72 | 27.4 |
| Preparation Example 3 | 4 | 1.5 | 23.6 |
| Preparation Example 4 | 3.2 | 1.93 | 5.1 |
| Preparation Example 5 | 3.1 | 2.21 | 7.4 |
| Preparation Example 6 | 3.7 | 2.58 | 12.5 |
| Preparation Example 7 | 3.3 | 3.77 | 23.2 |
| Preparation Example 8 | 3.5 | 4.12 | 24.6 |
| Preparation Example 9 | 5.9 | 6.95 | 29.8 |
| Preparation Example 10 | 7.1 | 0.95 | 4.8 |
| Preparation Example 11 | 6.8 | 7.31 | 30.4 |
| Preparation Example 12 | 9.5 | 0.81 | 3.9 |

### Inventive example and Comparative Example - Negative electrode for secondary battery

### Inventive Example 1

A negative electrode slurry was prepared by mixing the silicon-based oxide particle of Preparation Example 2, artificial graphite, carbon nanotubes (CNT) as a conductive material, a styrene-butadiene rubber (SBR) as a binder, and carboxymethyl cellulose (CMC) as a thickener at a weight ratio of 10.0:85.5:1.0:2.0:1.5, and adding distilled water as a solvent.

The prepared negative electrode slurry was coated on a 12 µm thick copper substrate, rolled, and dried at 100° C for 12 hours to prepare a negative electrode for a secondary battery.

A polyethylene separator was interposed between the prepared negative electrode and lithium (Li) metal. The lithium metal/separator/negative electrode combination was then placed in a coin cell plate, an electrolyte was injected, and a cap was covered and clamped to manufacture a half-cell. For the electrolyte, a 1.0M lithium salt (LiPF6) was mixed in an organic solvent (EC:EMC = 30:70 vol%), and an electrolyte additive of 5 vol% FEC was mixed.

### Inventive Example 2

A negative electrode for a secondary battery was manufactured in the same manner as in Inventive Example 1, except that the silicon-based oxide particle of Preparation Example 3 was used instead of the silicon-based oxide particle of Preparation Example 2.

### Inventive Example 3

A negative electrode for a secondary battery was manufactured in the same manner as in Inventive Example 1, except that the silicon-based oxide particle of Preparation Example 4 was used instead of the silicon-based oxide particle of Preparation Example 2.

### Inventive Example 4

A negative electrode for a secondary battery was manufactured in the same manner as in Inventive Example 1, except that the silicon-based oxide particle of Preparation Example 5 was used instead of the silicon-based oxide particle of Preparation Example 2.

### Inventive Example 5

A negative electrode for a secondary battery was manufactured in the same manner as in Inventive Example 1, except that the silicon-based oxide particle of Preparation Example 6 was used instead of the silicon-based oxide particle of Preparation Example 2.

### Inventive Example 6

A negative electrode for a secondary battery was manufactured in the same manner as in Inventive Example 1, except that the silicon-based oxide particle of Preparation Example 7 was used instead of the silicon-based oxide particle of Preparation Example 2.

### Inventive Example 7

A negative electrode for a secondary battery was manufactured in the same manner as in Inventive Example 1, except that the silicon-based oxide particle of Preparation Example 8 was used instead of the silicon-based oxide particle of Preparation Example 2.

### Inventive Example 8

A negative electrode for a secondary battery was manufactured in the same manner as in Inventive Example 1, except that the silicon-based oxide particle of Preparation Example 9 was used instead of the silicon-based oxide particle of Preparation Example 2.

### Inventive Example 9

A negative electrode for a secondary battery was manufactured in the same manner as in Inventive Example 1, except that the silicon-based oxide particle of Preparation Example 10 was used instead of the silicon-based oxide particle of Preparation Example 2.

### Comparative Example 1

A negative electrode for a secondary battery was manufactured in the same manner as in Inventive Example 1, except that the silicon-based oxide particle of Preparation Example 1 was used instead of the silicon-based oxide particle of Preparation Example 2.

### Comparative Example 2

A negative electrode for a secondary battery was manufactured in the same manner as in Inventive Example 1, except that the silicon-based oxide particle of Preparation Example 11 was used instead of the silicon-based oxide particle of Preparation Example 2.

### Comparative Example 3

A negative electrode for a secondary battery was manufactured in the same manner as in Inventive Example 1, except that the silicon-based oxide particle of Preparation Example 12 was used instead of the silicon-based oxide particle of Preparation Example 2.

### Experimental Example 2 - Electrochemical properties of silicon-based oxide particle

The resistance of the prepared negative electrode was measured using resistance measuring equipment (RM2610 manufactured by HIOKI).

A half-cell was charged (CC-CV 0.1C 0.01V 0.01C CUT-OFF) and discharged (CC 0.1C 2.5V CUT-Off) to measure initial charge capacity and initial discharge capacity. The initial charge capacity and the initial discharge capacity of a silicon oxide were calculated based on a weight ratio with graphite. The percentage of the ratio of the initial discharge capacity to the initial charge capacity was calculated as initial efficiency.

In addition, the half-cell was charged (CC-CV 3.0 C 0.01V 0.3C CUT-OFF) and discharged (CC 0.1C 1.5V CUT-Off; or CC 3.0C 1.5V CUT-Off) to calculate the percentage of a ratio of a 3.0C discharge capacity to a 0.1C discharge capacity (mAh/g) as a rate characteristic (3.0C/0.1C).

In addition, the half-cell was charged (CC-CV 0.1 C 0.01 V 0.05 C CUT-OFF), stored at 45° C for 16 weeks, and then discharged (CC 0.1 C 1.5 V CUT-Off), and a ratio with respect to the initial discharge capacity was calculated to output the storage capacity as a percentage. The experimental values of Inventive Examples 1 to 9 and Comparative Examples 1 to 3 are shown in Table 2 below.

**[Table 2]**

| | Electrode resistance [mΩ·cm] | Discharge capacity [mAh/g] | Initial Efficiency [%] | 3C/0.1C[%] | Storage Capacity [%] | Coating amount [%] | Specific surface area [m³/g] | Roughness [nm] |
|---|---|---|---|---|---|---|---|---|
| Comparative Example 1 | 151 | 1535 | 66.2 | 73 | 76 | 0 | 2.45 | 18.1 |
| Inventive Example 1 | 75 | 1665 | 76.4 | 84 | 80 | 3.5 | 2.72 | 27.4 |
| Inventive Example 2 | 82 | 1672 | 76.7 | 85 | 79 | 4 | 1.5 | 23.6 |
| Inventive Example 3 | 63 | 1653 | 76.6 | 81 | 82 | 3.2 | 1.93 | 5.1 |
| Inventive Example 4 | 96 | 1686 | 76.9 | 83 | 82 | 3.1 | 2.21 | 7.4 |
| Inventive Example 5 | 70 | 1664 | 76.5 | 82 | 81 | 3.7 | 2.58 | 12.5 |
| Inventive Example 6 | 79 | 1674 | 77.1 | 83 | 80 | 3.3 | 3.77 | 23.2 |
| Inventive Example 7 | 84 | 1657 | 76.3 | 84 | 79 | 3.5 | 4.12 | 24.6 |
| Inventive Example 8 | 64 | 1640 | 76.1 | 86 | 78 | 5.9 | 6.95 | 29.8 |
| Inventive Example 9 | 29 | 1623 | 77.7 | 77 | 84 | 7.1 | 0.95 | 4.8 |
| Comparative Example 2 | 48 | 1634 | 75.3 | 87 | 71 | 6.8 | 7.31 | 30.4 |
| Comparative Example 3 | 30 | 1598 | 77.6 | 75 | 84 | 9.5 | 0.81 | 3.9 |

As shown in Table 2, it was confirmed that the discharge capacity, initial efficiency, rate characteristics, and storage capacity of the secondary batteries of the inventive examples were improved compared to those of the comparative examples. The carbon coating layer 12 was formed on the silicon-based oxide particle, and the surface roughness of the carbon coating layer 12 was greater than or equal to 4 nm and less than or equal to 30 nm, so that the electrode resistance may be lowered and the electrical conductivity may be increased.

In Inventive Examples 1 and 2, the negative electrode active material was prepared by mixing the silicon-based oxide particle and the carbon source with each other. The carbon coating layer 12 was formed, and the surface roughness was also formed between 4 nm and 30 nm. Thus, it was confirmed that Inventive Examples 1 and 2 show superior characteristics compared to Comparative Examples 1 to 3.

In Inventive Examples 3 to 9, the negative electrode active material was prepared using the hydrocarbon gas. Similarly, the carbon coating layer 12 was formed, and the surface roughness was formed between 4 nm and 30 nm. Thus, it was confirmed that Inventive Examples 3 to 9 show superior characteristics compared to Comparative Examples 1 to 3.

More specifically, it was confirmed that Comparative Example 1, in which the carbon coating layer 12 was not formed, showed high electrode resistance, low initial efficiency, and low rate characteristics. Since the electrical resistance is maintained high, movements of electrons in the electrode may not be made smoothly. As a result, the initial efficiency and the rate characteristics may appear low.

Comparative Example 3 also shows a lower discharge capacity of 1598 mAh/g compared to Inventive Examples 1 to 9. The rate characteristics of Comparative Example 3 were also similar to those of Comparative Example 1 where the carbon coating layer 12 was not formed. Thus, it was confirmed that the performance of the secondary battery was poor when the roughness was 4 nm or less. In comparison, it was confirmed that Inventive Example 9 showed excellent characteristics in terms of initial efficiency, rate characteristics, and storage capacity as well as discharge capacity.

In Comparative Example 2, it was confirmed that the high values of the discharge capacity and the rate characteristics were showed, whereas the storage capacity was very low. As the roughness of the carbon coating layer 12 increases, the entry and exit of the lithium ions may be accelerated, but as a result, side reactions may also increase, resulting in very low storage performance. In contrast, it was confirmed that Inventive Example 8 showed excellent performance in all measured characteristics including discharge capacity.

In addition, when the BET specific surface area of the carbon coating layer 12 is formed to be 0.90 m²/g or more and/or 7.00 m²/g or less, the discharge capacity, the initial efficiency, the rate characteristics, and the storage capacity may be improved.

It was confirmed that Inventive Examples 1 to 9 showed superior characteristics compared to Comparative Examples 2 and 3 as the specific surface area was formed within the above-described range. In the case of Comparative Example 1, although the specific surface area is formed within the above-described range, the carbon coating layer 12 is not included.

According to an embodiment of the present disclosure, it is possible to provide a secondary battery having a high capacity, excellent charge/discharge characteristics, and improved storage performance.

In addition, the present disclosure may provide a secondary battery with improved structural stability.

## Claims

1. A negative electrode active material for a secondary battery (200), comprising:
a silicon-based oxide particle (11); and
a carbon coating layer (12) coating at least a portion of the silicon-based oxide particle (11),
wherein the carbon coating layer (12) has a surface roughness of greater than or equal to 4 nm and less than or equal to 30 nm,
wherein the surface roughness is measured using an atomic force microscope as described in the description.

2. The negative electrode active material for the secondary battery (200) according to claim 1, wherein the carbon coating layer (12) comprises at least one selected from the group consisting of natural graphite, artificial graphite, hard carbon, and soft carbon.

3. The negative electrode active material for the secondary battery (200) according to claim 1 or 2, wherein the silicon-based oxide particle (11) including the carbon coating layer (12) has a BET specific surface area of greater than or equal to 0.90 m²/g and/or less than or equal to 7.00 m²/g.

4. The negative electrode active material for the secondary battery (200) according to any one of claims 1 to 3, wherein the silicon-based oxide particle (11) is doped with at least one metal selected from the group consisting of Mg, Li, Al, Ca, Ti, and V.

5. The negative electrode active material for the secondary battery (200) according to any one of claims 1 to 4, further comprising a carbon-based active material (20),
wherein the silicon-based oxide particle (11) is dispersed in the carbon-based active material (20).

6. The negative electrode active material for the secondary battery (200) according to claim 5, wherein the carbon-based active material (20) comprises at least one selected from the group consisting of artificial graphite, natural graphite, hard carbon, soft carbon, and activated carbon.

7. A negative electrode for a secondary battery (200), comprising:
a negative electrode current collector (110); and
an active material layer (120) including the negative electrode active material of any one of claims 1 to 6.

8. The negative electrode for the secondary battery (200) according to claim 7, wherein the active material layer (120) further comprises a carbon-based active material (20), and
wherein the silicon-based oxide particle (11) is dispersed in the carbon-based active material (20).

9. A secondary battery (200), comprising:
the negative electrode (100) of claim 7 or 8; and
a positive electrode facing the negative electrode (100).

10. A method of manufacturing a negative electrode active material for a secondary battery (200), the method comprising:
forming a carbon coating layer (12) on a silicon-based oxide particle (11),
wherein the forming the carbon coating layer (12) comprises mixing the silicon-based oxide particle (11) with a carbon source,
wherein the carbon coating layer (12) has a surface roughness of greater than or equal to 4 nm and less than or equal to 30 nm,
wherein the surface roughness is measured using an atomic force microscope as described in the description.

11. The method according to claim 10, wherein the carbon source is at least one selected from the group consisting of liquid pitch, solid pitch, resin, coal tar, and cokes.

12. The method according to claim 10 or 11, wherein the forming the carbon coating layer (12) is performed at 800 °C or more and 1200 °C or less.

13. The method according to any one of claims 10 to 12, wherein the forming the carbon coating layer (12) comprises:
injecting the silicon-based oxide particle (11) into a chamber; and
injecting hydrocarbon gas into the chamber.

14. The method according to claim 13, wherein the hydrocarbon gas comprises at least one selected from the group consisting of acetylene, ethylene, propane, ethane, and methane.

## Patentansprüche

1. Negativelektrodenaktivmaterial für eine Sekundärbatterie (200), umfassend: ein Oxidpartikel auf Siliziumbasis (11); und
eine Kohlenstoffbeschichtungsschicht (12), die mindestens einen Teil des Oxidpartikels auf Siliziumbasis (11) beschichtet,
wobei die Kohlenstoffbeschichtungsschicht (12) eine Oberflächenrauheit von größer als oder gleich 4 nm und kleiner als oder gleich 30 nm aufweist,
wobei die Oberflächenrauheit unter Verwendung eines Atomkraftmikroskops gemessen wird, wie in der Beschreibung beschrieben.

2. Negativelektrodenaktivmaterial für die Sekundärbatterie (200) gemäß Anspruch 1, wobei die Kohlenstoffbeschichtungsschicht (12) mindestens eines umfasst, das aus der Gruppe ausgewählt ist, die aus natürlichem Graphit, künstlichem Graphit, hartem Kohlenstoff und weichem Kohlenstoff besteht.

3. Negativelektrodenaktivmaterial für die Sekundärbatterie (200) gemäß Anspruch 1 oder 2, wobei das Oxidpartikel auf Siliziumbasis (11) einschließlich der Kohlenstoffbeschichtungsschicht (12), eine spezifische BET-Oberfläche von größer als oder gleich 0,90 m²/g und/oder kleiner als oder gleich 7,00 m²/g aufweist.

4. Negativelektrodenaktivmaterial für die Sekundärbatterie (200) gemäß irgendeinem der Ansprüche 1 bis 3, wobei das Oxidpartikel auf Siliziumbasis (11) mit mindestens einem Metall dotiert ist, das aus der Gruppe ausgewählt ist, die aus Mg, Li, Al, Ca, Ti und V besteht.

5. Negativelektrodenaktivmaterial für die Sekundärbatterie (200) gemäß irgendeinem der Ansprüche 1 bis 4, ferner umfassend ein Aktivmaterial auf Kohlenstoffbasis (20),
wobei das Oxidpartikel auf Siliziumbasis (11) in dem Aktivmaterial auf Kohlenstoffbasis (20) dispergiert ist.

6. Negativelektrodenaktivmaterial für die Sekundärbatterie (200) gemäß Anspruch 5, wobei das Aktivmaterial auf Kohlenstoffbasis (20) mindestens eines umfasst, das aus der Gruppe ausgewählt ist, die aus künstlichem Graphit, natürlichem Graphit, hartem Kohlenstoff, weichem Kohlenstoff und Aktivkohle besteht.

7. Negativelektrode für eine Sekundärbatterie (200), umfassend:
einen Negativelektrodenstromkollektor (110); und
eine Aktivmaterialschicht (120), die das Negativelektrodenaktivmaterial gemäß irgendeinem der Ansprüche 1 bis 6 umfasst.

8. Negativelektrode für die Sekundärbatterie (200) gemäß Anspruch 7, wobei die Aktivmaterialschicht (120) ferner ein Aktivmaterial auf Kohlenstoffbasis (20) umfasst, und
wobei das Oxidpartikel auf Siliziumbasis (11) in dem Aktivmaterial auf Kohlenstoffbasis (20) dispergiert ist.

9. Sekundärbatterie (200), umfassend:
die Negativelektrode (100) gemäß Anspruch 7 oder 8; und
eine Positivelektrode, die der Negativelektrode (100) zugewandt ist.

10. Verfahren zur Herstellung eines Negativelektrodenaktivmaterials für eine Sekundärbatterie (200), wobei das Verfahren umfasst:
Bilden einer Kohlenstoffbeschichtungsschicht (12) auf einem Oxidpartikel auf Siliziumbasis (11),
wobei das Bilden der Kohlenstoffbeschichtungsschicht (12) das Mischen des Oxidpartikels auf Siliziumbasis (11) mit einer Kohlenstoffquelle umfasst,
wobei die Kohlenstoffbeschichtungsschicht (12) eine Oberflächenrauheit von größer als oder gleich 4 nm und kleiner als oder gleich 30 nm aufweist,
wobei die Oberflächenrauheit unter Verwendung eines Atomkraftmikroskops gemessen wird, wie in der Beschreibung beschrieben.

11. Verfahren gemäß Anspruch 10, wobei die Kohlenstoffquelle mindestens eine ist, die aus der Gruppe ausgewählt ist, die aus flüssigem Pech, festem Pech, Harz, Kohlenteer und Koksen besteht.

12. Verfahren gemäß Anspruch 10 oder 11, wobei das Bilden der Kohlenstoffbeschichtungsschicht (12) bei 800 °C oder mehr und 1200 °C oder weniger durchgeführt wird.

13. Verfahren gemäß irgendeinem der Ansprüche 10 bis 12, wobei das Bilden der Kohlenstoffbeschichtungsschicht (12) umfasst:
Injizieren des Oxidpartikels auf Siliziumbasis (11) in eine Kammer; und
Injizieren von Kohlenwasserstoffgas in die Kammer.

14. Verfahren gemäß Anspruch 13, wobei das Kohlenwasserstoffgas mindestens eines umfasst, das aus der Gruppe ausgewählt ist, die aus Acetylen, Ethylen, Propan, Ethan und Methan besteht.

## Revendications

1. Matériau actif d'électrode négative pour une batterie secondaire (200), comprenant :
une particule d'oxyde à base de silicium (11) ; et
une couche de revêtement de carbone (12) recouvrant au moins une partie de la particule d'oxyde à base de silicium (11),
dans lequel la couche de revêtement de carbone (12) a une rugosité de surface supérieure ou égale à 4 nm et inférieure ou égale à 30 nm,
dans lequel la rugosité de surface est mesurée à l'aide d'un microscope à force atomique tel que décrit dans la description.

2. Matériau actif d'électrode négative pour la batterie secondaire (200) selon la revendication 1, dans lequel la couche de revêtement de carbone (12) comprend au moins un élément choisi dans le groupe constitué par le graphite naturel, le graphite artificiel, le carbone dur et le carbone doux.

3. Matériau actif d'électrode négative pour la batterie secondaire (200) selon la revendication 1 ou 2, dans lequel la particule d'oxyde à base de silicium (11) avec la couche de revêtement de carbone (12) a une surface spécifique BET supérieure ou égale à 0,90 m²/g et/ou inférieure ou égale à 7,00 m²/g.

4. Matériau actif d'électrode négative pour la batterie secondaire (200) selon l'une quelconque des revendications 1 à 3, dans lequel la particule d'oxyde à base de silicium (11) est dopée avec au moins un métal choisi dans le groupe constitué par Mg, Li, Al, Ca, Ti et V.

5. Matériau actif d'électrode négative pour la batterie secondaire (200) selon l'une quelconque des revendications 1 à 4, comprenant en outre un matériau actif à base de carbone (20),
dans lequel la particule d'oxyde à base de silicium (11) est dispersée dans le matériau actif à base de carbone (20).

6. Matériau actif d'électrode négative pour la batterie secondaire (200) selon la revendication 5, dans lequel le matériau actif à base de carbone (20) comprend au moins un élément choisi dans le groupe constitué par le graphite artificiel, le graphite naturel, le carbone dur, le carbone doux et le carbone activé.

7. Électrode négative pour une batterie secondaire (200), comprenant :
un collecteur de courant d'électrode négative (110) ; et
une couche de matériau actif (120) comprenant le matériau actif d'électrode négative selon l'une quelconque des revendications 1 à 6.

8. Électrode négative pour la batterie secondaire (200) selon la revendication 7, dans laquelle la couche de matériau actif (120) comprend en outre un matériau actif à base de carbone (20), et
dans lequel la particule d'oxyde à base de silicium (11) est dispersée dans le matériau actif à base de carbone (20).

9. Batterie secondaire (200), comprenant :
l'électrode négative (100) selon la revendication 7 ou 8 ; et
une électrode positive faisant face à l'électrode négative (100).

10. Procédé de fabrication d'un matériau actif d'électrode négative pour une batterie secondaire (200), le procédé comprenant :
la formation d'une couche de revêtement de carbone (12) sur une particule d'oxyde à base de silicium (11),
dans lequel la formation de la couche de revêtement de carbone (12) comprend le mélange de la particule d'oxyde à base de silicium (11) avec une source de carbone,
dans lequel la couche de revêtement de carbone (12) a une rugosité de surface supérieure ou égale à 4 nm et inférieure ou égale à 30 nm,
dans lequel la rugosité de surface est mesurée à l'aide d'un microscope à force atomique tel que décrit dans la description.

11. Procédé selon la revendication 10, dans lequel la source de carbone est au moins une source choisie dans le groupe constitué par le brai liquide, le brai solide, la résine, le goudron de houille et les cokes.

12. Procédé selon la revendication 10 ou 11, dans lequel la formation de la couche de revêtement de carbone (12) est effectuée à 800 °C ou plus et à 1200 °C ou moins.

13. Procédé selon l'une quelconque des revendications 10 à 12, dans lequel la formation de la couche de revêtement de carbone (12) comprend :
l'injection de la particule d'oxyde à base de silicium (11) dans une chambre ; et
l'injection d'un gaz hydrocarboné dans la chambre.

14. Procédé selon la revendication 13, dans lequel le gaz hydrocarboné comprend au moins un élément choisi dans le groupe constitué par l'acétylène, l'éthylène, le propane, l'éthane et le méthane.
